# EUROPÄISCHE PATENTSCHRIFT

(11) **EP 0 582 828 B1**
(45) Veröffentlichungstag und Bekanntmachung des Hinweises auf die Patenterteilung: **01.05.1996**
(21) Anmeldenummer: 93110685.0
(22) Anmeldetag: 05.07.1993
(51) Int. Cl.: H02B 13/035

(54) **Schaltanlage**
Switchgear
Installation de distribution électrique

(30) Priorität: 10.08.1992 DE 4226472
(43) Veröffentlichungstag der Anmeldung: 16.02.1994
(73) Patentinhaber: AEG Sachsenwerk GmbH, D-93055 Regensburg (DE)
(72) Erfinder: Stegmüller, Karl, Dipl.-Ing., D-93109 Wiesent (DE); Reichl, Erwin, Dipl.-Ing., D-93105 Tegernheim (DE)
(74) Vertreter: Breiter, Achim, Dipl.-Ing.

(56) Entgegenhaltungen:
- DE-A- 2 806 480
- DE-A- 3 915 948

## Beschreibung

Die Erfindung betrifft eine Schaltanlage gemäß dem Oberbegriff des Anspruchs 1.

Bei einer bekannten Schaltanlage dieser Art (DE 39 15 948 A1) sind mehrere Schaltfelder nebeneinander angeordnet und miteinander verbunden. Die Gehäuse dieser Schaltfelder weisen in Anreihrichtung durchgehend gleiches Querschnittsprofil auf und sind in Anreihrichtung beidseitig offen, wobei nur die außenliegenden Seitenwände der zu einer Schaltfeldeinheit zusammengefaßten Schaltfelder mit einer angepaßten Abdeckung verschlossen werden. Die Frontseite der einzelnen Schaltfeldgehäuse weist einen bestimmten Frontwandabschnitt auf, gegenüber welchem in einem unteren Bereich ein zurückgesetzter Frontwandabschnitt mit eingesetzten Kabelsteckbuchsen und ferner ein nach vorn vorgezogener Wandabschnitt vorgesehen sind. Der vorgezogene Wandabschnitt bildet hierbei den obersten Teil der Frontseite, von dem aus die Front in Stufen zum bestimmten Frontwandabschnitt und den darunter angeordneten zurückgesetzten Wandabschnitt abfällt. Innerhalb eines vom zugehörigen Schaltfeld umgegebenen Raumes befinden sich Hochspannungssicherungen, die mit ihrer Längsachse senkrecht zum vorgezogenen Wandabschnitt in einer Dreiecksanordnung stehen. Die Hochspannungssicherungen sind dabei in gasdichtem, zur Frontseite hin offenen Hülsen angeordnet, die ihrerseits gasdicht an den vorgezogenem Wandabschnitt angeschlossen sind. Unterhalb der Hochspannungssicherungen ist ein Dreistellungsschalter innerhalb des Schaltfeldes am betreffenden Frontwandabschnitt festgesetzt, wobei sich auf der Außenseite dieses Frontwandabschnitts ein Antrieb für den Dreistellungsschalter befindet, der über die vom vorgezogenen Wandabschnitt bestimmte Ebene hinausragt. Unterhalb des Dreistellungsschalters verläuft im Raum hinter dem zurückgesetzten Wandabschnitt ein Sammelschienensystem in Anreihrichtung durch benachbarte Schaltfelder. In einer dagegen abgewandelten Ausgestaltung eines Schaltfeldes kann im Raum hinter dem vorgezogenen Wandabschnitt an Stelle von Hochspannungssicherungen auch eine Vakuum-Leistungsschaltereinheit angeordnet werden, die ihrerseits an einem angepaßten Traggestell an der Deckfläche des betreffenden Schaltfeldgehäuses festgesetzt ist. Auf dem vorgezogenen Wandabschnitt sitzt dabei eine Antriebseinheit für die Vakuum-Leistungsschalter, deren Längsachse in Anreihrichtung weist. Dabei sorgt der auf den vorgezogenen Wandabschnitt aufgesetzte Antriebskasten für eine zusätzliche Vergrößerung der Anlagentiefe. Außerdem muß der vorgezogene Wandabschnitt durch die Dreiecksanordnung der Hochspannungssicherungen entsprechend hoch ausgebildet werden, so daß die an deren Stelle setzbare Vakuum-Leistungsschaltereinheit mittels einer entsprechenden Tragbrücke im Abstand von der der Befestigung dienenden Deckenwand anzubringen ist. Ihre Befestigung an dem vorgezogenen Wandabschnitt erforderte wegen der stufigen Ausführung der Frontseite entsprechende Abstandsstützmittel.

Der Erfindung liegt die Aufgabe zugrunde, bei einer Schaltanlage gemäß dem Oberbegriff des Anspruchs 1 Maßnahmen zu treffen, durch welche eine optimierte, raumsparende Anordnung der einem Schaltfeld zugeordneten Schaltelemente möglich wird.

Die Lösung dieser Aufgabe erfolgt gemäß der Erfindung durch die kennzeichnenden Merkmale des Anspruchs 1.

Bei einem Aufbau einer Schaltanlage gemäß der Erfindung wird durch die Anordnung des vorgezogenen Wandabschnitts unmittelbar oberhalb des zurückgesetzten Wandabschnitts der darüberliegende, eine bestimmte mittlere Gehäusetiefe festlegende Frontwandabschnitt für die unmittelbare Anordnung von Hochspannungsschaltern, insbesondere Lasttrennschaltern oder Trennleistungsschaltern nutzbar. Abstandshaltende Träger sind zu deren Befestigung nicht erforderlich. Dabei ist der darunterliegende Raum oberhalb des zurückgesetzten Wandabschnitts frei nutzbar, solange in diesem Raum, der hinter dem vorgezogenen Wandabschnitt liegt, keine Hochspannungssicherungen eingebracht sind. Bei fehlenden Hochspannungssicherungen kann demnach ein Hochspannungstrennschalter und ein mit senkrecht nach unten gerichteten Achsen angeordneter Vakuum-Leistungsschalter als Trennleistungsschalter unmittelbar im Raum oberhalb des zurückgezogenen Wandabschnitts angeordnet werden, wobei die Befestigung dieses Trennleistungsschalters allein an dem oberen Frontwandabschnitt erfolgen kann. Die Hochspannungsschalter können dabei in waagerechter Richtung nebeneinander sitzen. Außen vor dem die Hochspannungsschalter tragenden Frontwandabschnitt kann in vorteilhafter Weise eine Antriebseinrichtung für diese Hochspannungsschalter angeordnet werden, für die der Raum oberhalb des vorgezogenen Wandabschnitts und vor dem Frontwandabschnitt ausgenutzt werden kann. Dabei können diesen Hochspannungsschaltern zugleich Erdungsschalter zugeordnet werden, die mittels des gleichen Antriebskastens verstellt werden können. Im Bereich des zurückgesetzten Wandabschnitts kann an der Rückwand des Gehäuses auch je Kabeleinführung ein Erdungsschalter vorgesehen werden, der unmittelbar mit einem an der benachbarten Kabelsteckbuchse vorgesehenen Erdungskontakt in Wirkeingriff gebracht werden kann. Sofern eine Schaltanlage aus einer Vielzahl von Schaltfeldern zusammengesetzt wird, ist es zweckmäßig mehrere der Schaltfelder zu einer Schaltfeldeinheit mechanisch zusammen zu bauen und benachbarte Schaltfeldeinheiten über eine Hochspannungskoppeleinrichtung elektrisch miteinander zu verbinden. Dabei ist es zweckmäßig, entsprechende Koppelleiter in einem außerhalb benachbarter Schaltfelder angeordneten gasgefüllten Koppelkanal zu führen. In diesem Koppelkanal können zugleich Trennschalter angeordnet sein, die in die Koppelleiter in Serie eingeschaltet sind, um einzelne Schaltfeldeinheiten zum Zwecke des Austauschs oder der Reparatur hochspannungsfrei schalten zu können. Es ist jedoch auch möglich, die Koppeleinrichtung aus je einer Koppelsteckbuchse in benachbarten Schaltfeldern zu bilden, wobei die elektrische Verbindung mittels Kabeln und daran angeordneten Kabelsteckern erfolgt. Es ist außerdem zweckmäßig, mehreren zu einer Schaltfeldeinheit zusammengefaßten Schaltfeldern einen gemeinsamen etwa über ihre Länge in Anreihrichtung reichenden, kleinvolumigen Sekundärsteuerkasten zuzuordnen, der beispielsweise die je Schaltfeld erforderliche Feldschnittstelle und die notwendigen Steuerversorgungsleitungen führt. Die Feldschnittstelle besteht dabei insbesondere aus einem Analog-Digitalwandler, der im jeweiligen Schaltfeld über Sensoren ermittelte Analog-Steuersignale digitalisiert und beispielsweise mittels eines Lichtsenders in einen Lichtwellenleiter einspeist, welcher zu einer dem oder den Schaltfeldeinheiten gemeinsamen Steuerzentraleinheit führt. Es ist jedoch auch möglich, die Steuersignale über übliche elektrische Steuerleitungen zur Steuerzentraleinheit zu führen. Dabei kann die Steuerzentraleinheit als eigenständiger, außen an eine Schaltfeldeinheit angefügter Steuerschrank ausgebildet sein, in dem alle Zentralsteuermittel untergebracht sind. Zur autarken Stromversorgung der Schaltanlage aus einem Hochspannungstransformator (z. B. Spannungwandler) ist ein Steuerstromschrank vorgesehen, der auch eine Notstromversorgung für die Steuereinrichtungen enthält. Dabei enthält die Stromversorgung vorteilhaft auch ein Pufferbatteriemodul, aus dem im Störungsfall die erforderlichen Steuer- und Versorgungsspannungen generiert werden können.

Die Erfindung ist nachfolgend anhand der Skizzen von Ausführungsbeispielen näher erläutert.

Es zeigen:
Fig.1 einen Querschnitt durch ein Schaltfeld mit eingesetzten Sicherungen,
Fig. 2 einen Querschnitt durch ein Schaltfeld mit einem Lasttrennschalter,
Fig. 3 einen Querschnitt durch ein Schaltfeld mit einem Trennleistungsschalter,
Fig. 4 eine Schaltanlage in Frontansicht,
Fig. 5 die Schaltanlage in Seitenansicht,
Fig. 6 eine Hochspannungsschaltanlage mit einer Hochspannungskoppeleinrichtung zwischen zwei Schaltfeldeinheiten,
Fig. 7 eine Koppeleinrichtung mit Trennschalter,
Fig. 8 eine Koppeleinrichtung mit einem Kabel und
Fig. 9 eine Prinzipschaltung einer für die Schaltanlage vorgesehenen Steuereinrichtung.

In einer metallgekapselten, gasisolierten Mittelspannungsschaltanlage sind einzelne Schaltfelder 1 nebeneinander angeordnet und miteinander verbunden, wobei beispielsweise je fünf miteinander verbundene Schaltfeld-Funktionseinheiten 1 eine Schaltfeldeinheit 2 bilden. Die Schaltfelder 1 umschließen mit einem Gehäuse 3 gasdicht einen mit einem Schutzgas, insbesondere SF6 gefüllten Gasraum 4, wobei die Gasräume 4 der einzelnen Schaltfelder einer Schaltfeldeinheit 2 miteinander kommunizieren. Die Gehäuse 3 sind im Bereich ihrer offenen Stirnseiten gasdicht miteinander verbunden und lediglich die seitlichen Endstirnflächen 4 sind zur Außenatmosphäre hin mit ebenfalls gasdicht abschließenden Abschlußwänden verschlossen. Sie können jedoch auch über Durchführungen gasdicht verschlossen sein, damit die Schaltfeldeinheiten gasgefüllt auf die Baustelle kommen können. Die Gehäuse 3 der Schaltfelder 1 weisen in Anreihrichtung ein durchgehend gleiches Querschnittsprofil auf, so daß ihr gasdichtes Aneinanderreihen ohne besondere Hilfsmittel über zwischengelegte Dichtungen oder durch Verschweißen möglich ist. Vorzugsweise ist das Gehäuse 3 wenigstens im gestuften Frontwandbereich über mehrere Schaltfeldfunktionseinheiten 1 hinweg einstückig ausgebildet und erstreckt sich insbesondere als einstückiges Mantelblecht eil über die gesamte Breite einer mehrfeldigen Schaltfeldeinheit. Dabei ist die Frontseite des oder der Gehäuse 3 in waagerechter Richtung in Wandabschnitte unterteilt, die eine unterschiedliche Gehäusetiefe definieren. Hierbei bestimmt der obere Basis-Frontwandabschnitt 5, der sich beispielsweise über wenigstens die halbe Höhe des Gehäuses 3 erstreckt, eine Grundebene, gegenüber welcher der sich nach unten anschließende Wandabschnitt 6 in einer Stufe nach vorn vorgezogen ist und etwa ein Viertel der Gehäusehöhe ausmacht. Unterhalb dieses vorgezogenen Wandabschnitts 6 springt die Frontseite hinter die vom Frontwandabschnitt 5 gebildete Grundebene in einer wiederum senkrechten Stufe zurück, wobei sich dort nach unten hin der unterste Wandabschnitt 7 anschließt. Vom untersten Wandabschnitt 7 läuft das Gehäuse mit seiner Unterwand senkrecht zur Rückwand 9 hin. Durch den unteren Wandabschnitt 7 sind Kabelsteckbuchsen 10 in waagerechter Richtung gasdicht hindurchgeführt, so daß Kabelstecker 11 an von außen herangeführte Kabel 12 von der Vorderseite, 13 eines Schaltfeldes aus aufgesteckt werden können. Vorzugsweise liegen pro Funktionseinheit Schaltfeld drei Kabelsteckbuchsen 10 in waagerechter Richtung nebeneinander im unteren Wandabschnitt 7. Die Deckwand 14 des Gehäuses verläuft im übrigen ebenfalls senkrecht zur Rückwand 9 und verbindet dieselbe mit dem Frontwandabschnitt 5. Im Gasraum 4 ist auf dem die Grundebene bildenden Frontwandabschnitt 5 unmittelbar eine Hochspannungsschalteinrichtung 15 aus drei vorzugsweise eigenständigen Hochspannungsschaltern befestigt.

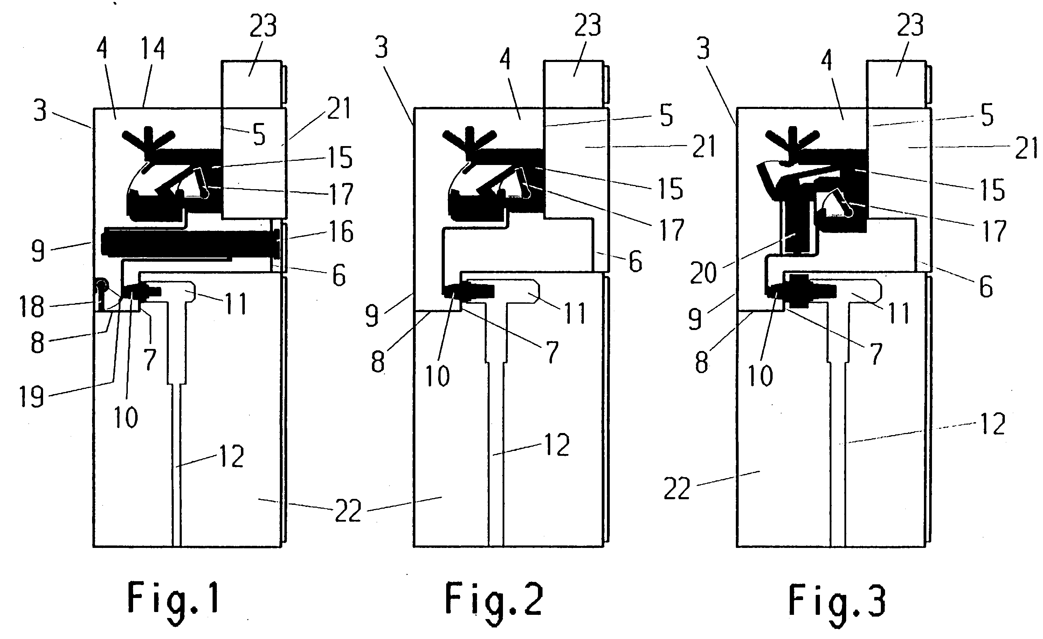

Gemäß Fig. 1 befinden sich im Gasraum 4 hinter dem vorgezogenen Wandabschnitt 6 in waagerechter Richtung drei nebeneinander angeordnete Hochspannungssicherungen 16, die insbesondere in Isolierrohren liegen, welche durch den vorgezogenen Wandabschnitt 6 gasdicht hindurchgeführt sind und nur an diesem Ende offen sind, um die Hochspannungssicherungen 16 ohne einen Eingriff in den beispielsweise mit SF6 gefüllten Gasraum 4 austauschen zu können. Oberhalb der Hochspannungssicherungen 16 sitzen dann unmittelbar die Hochspannungsschalter 15. Die Hochspannungsschalter 15, die als Lastschalter oder Lasttrennschalter ausgebildet sein können, sind mit einem zusätzlichen Erdungsschalter 17 kombiniert, um den von der jeweiligen Hochspannungssicherung 16 kommenden elektrischen Verbindungsleiter bei geöffnetem Hochspannungsschalter 15 erden zu können. Auch im Bereich hinter dem unteren zurückgesetzten Wandabschnitt 7 ist an der Rückwand 9 ein Erdungsschalter 18 angeordnet, der mit einem unmittelbar an der Kabelsteckbuchse ausgeformten Erdungskontakt 19 in Schaltanlage gebracht werden kann. Die Erdungsschalter werden geschlossen, wenn die entsprechende Hochspannungssicherung 16 gehandhabt werden soll.

In der Ausführungsform gemäß Fig. 2 ist im Gegensatz zum Trafoabgangsfeld gemäß Fig. 1 bei sonst gleichem Aufbau keine Hochspannungssicherung im Bereich des vorgezogenen Wandabschnitts 6 vorgesehen. Hier kann der Gasraum hinter dem vorgezogenen Wandabschnitt 6 für die Anordnung eines Sammelschienensystems oder für die Anordnung anderer Hochspannungsbauelemente ausgenutzt werden.

Das in unveränderter Querschnittsprofilierung ausgebildete gasdichte Gehäuse 3 ist gemäß Fig. 3 bei entfernten Hochspannungssicherungen für die Aufnahme eines Trennleistungsschalters in SF6 ausgebildet, der durch Anfügen je einer Vakuumschaltkammer 20 an den betreffenden Hochspannungsschalter 15 gebildet ist. Dieser Hochspannungsschalter 15 ist hier als Trennschalter ausgebildet und über eine gemeinsame Getriebeanordnung zusammen mit der Vakuumschaltkammer von einem gemeinsamen Antrieb gesteuert. Dabei wird durch das Getriebe beim Ausschaltvorgang zuerst der Leistungsschalter 20 und erst danach der Trennschalter 15 geöffnet. Beim Einschalten schließt zuerst der Trennschalter 15 und danach der Leistungsschalter 20. Es braucht somit jeweils nur eine manuell durchzuführende Schalthandlung vorgenommen zu werden. Die richtige Schaltfolge steuert das Getriebe, so daß der Trennschalter 15 nicht unter Last betätigt wird. Die jeweilige Vakuumschaltkammer 20 kann dabei in raumnutzender Anordnung mit senkrechter Achse am Hochspannungsschalter 15 festgesetzt sein und über den Frontwandabschnitt 5 nach unten in den hinter dem vorgezogenen Frontwandabschnitt 6 liegenden Teil des Gasraums 4 ragen. Hierbei übernimmt der Vakuumschalter 20 die Leistungsschaltfunktion, während der Hochspannungsschalter 15 die Trennfunktion und der zugeordnete Erdungsschalter 17 die Erdungsfunktion übernimmt.

Der Raum oberhalb des vorgezogenen Wandabschnitts 6 und vor dem die Grundebene bildenden Frontabschnitt 5 ist für die Anordnung eines Antriebskastens 21 ausgenutzt. Die darin untergebrachten Antriebsmittel sind auf kürzestem Wege mit den direkt auf der Gegenseite des Frontabschnitts 5 angeordneten Hochspannungsschaltern 15, 17, 20 gekuppelt und können auch auf den Erdungsschalter 18 bei der Ausführungsform nach Fig. 1 einwirken. Durch die kurzen Verbindungen ergibt sich ein massearmer Antrieb, der schnelle Schaltbewegungen mit einem Minimum an Antriebsenergie ermöglicht. Die gasdichten Gehäuse 3 der Schaltfelder 1 sitzen im übrigen auf Sockeltragelementen 23, durch die von unten die Kabel 12 zu den Kabelsteckbuchsen 10 geführt werden.

Um eine geordnete Steuerleitungsverlegung zu ermöglichen, ist den einzelnen Schaltfeldeinheiten 2 ein etwa über ihre Länge in Anreihrichtung reichender, kleinvolumiger Sekundärkasten 23 zugeordnet. Dieser Sekundärsteuerkasten 23 sitzt vornehmlich oben auf dem Antriebskasten 21 und ist so angeordnet, daß er sich wie der Antriebskasten 21 in die Ebene der Vorderseite 13 des jeweiligen Schaltfeldes einfügt. In diesem Sekundärsteuerkasten 23 sind neben Sekundärsteuerleitungen beispielsweise für die Antriebe 21 auch Signalleitungen 24 und für jedes Schaltfeld 1 eine Feldschnittstelle 25 angeordnet. Dabei laufen im Sekundärsteuerkasten 23 Sekundärsteuerleitungen und Signalleitungen 24 zu einem an eine Schaltfeldeinheit 2 angereihten Steuerschrank 26, der eine Zentralsteuereinheit 37 enthält. Daneben ist die Höhe des Steuerschranks 26 so bemessen, daß er mit der Oberkante des Sekundärsteuerkastens 23 abschließt. Das trifft auch auf einen Steuerstromschrank 27 zu, der ebenfalls angereicht ist und zur Stromversorgung der Steuereinrichtungen 21, 26 dient. In diesem Steuerstromschrank befinden sich netzgespeiste Stromversorgungseinheiten und insbesondere ein Pufferbatteriemodul 28 für die Notstromversorgung der Steuereinrichtungen im Falle eines Netzausfalls. Die Stromversorgung erfolgt dabei über einen Transformator, der unmittelbar aus dem Sammelschienensystem der zu versorgenden Schaltanlage gespeist wird um einen autarken Betrieb ohne Hilfsstromquellen zu ermöglichen.

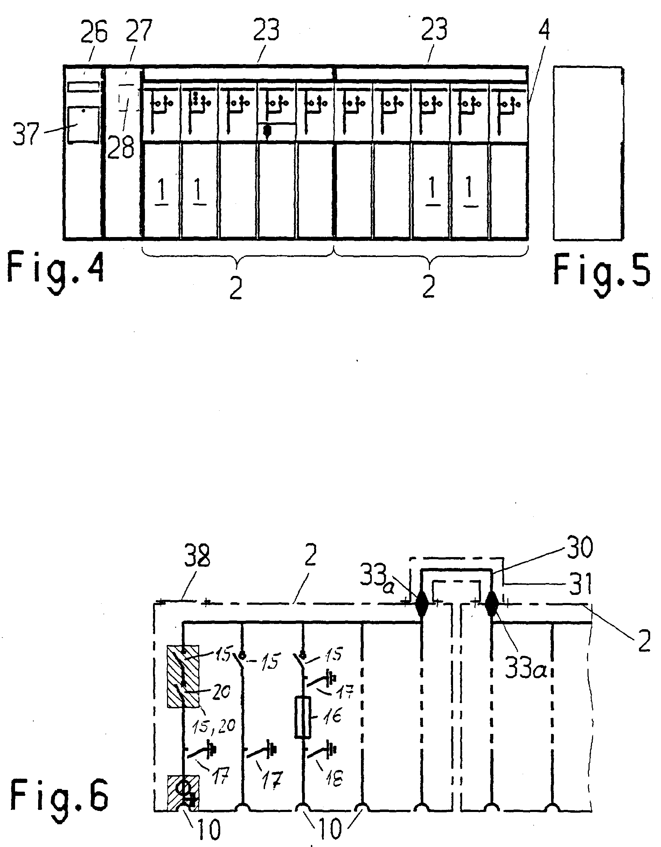

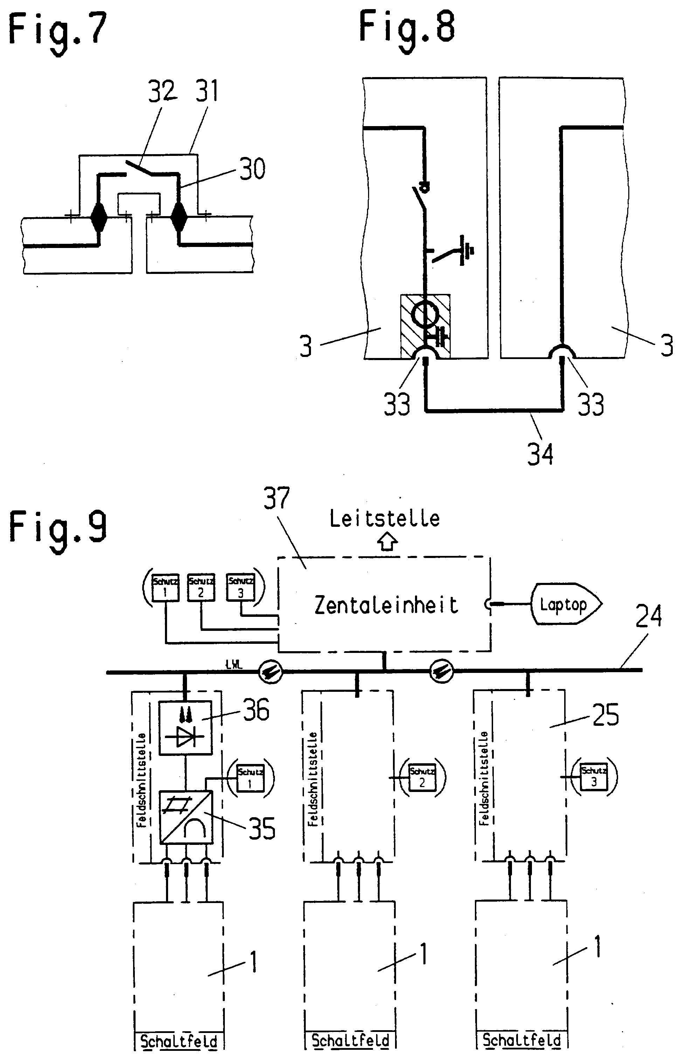

Um die Hochspannungsverbindungen zwischen benachbarten Schaltfeldeinheiten 2 bewerkstelligen zu können, sind gemäß Fig. 6 Koppelleiter 30 in einem außerhalb benachbarter Schaltfelder 1 der Schaltfeldeinheiten 2 angeordneten, gasgefüllten Koppelkanälen 31 geführt. Die Gehäuse 3 weisen für den Anschluß des Koppelkanals 31 Flanschflächen in der Deckwand 14 auf, an die der U-förmige Koppelkanal 31 angesetzt wird. Andernfalls werden die Flanschflächen mit einem Deckel 38 verschlossen. Die elektrische Verbindung erfolgt mittels der Koppelleiter 30, die an Durchführungsisolatoren 33 gehalten sind, welche in Bohrungen der Deckwand 14 eingesetzt werden können. In diesem Fall ist es möglich, die Trennung zwischen den Gasräumen der Schaltfeldeinheiten 2 aufrecht zu erhalten und gegebenfalls den Innenraum des Koppelkanals für sich mit einer Isoliergasfüllung zu versehen. Entsprechend Fig. 7 kann in den Koppelleiter 30 ein Trennschalter 32 eingefügt werden der gegebenenfalls vom Antrieb 21 aus betätigt werden kann. Der Koppelkanal 31 mit dem Koppelleiter 30 und gegebenfalls dem Trennschalter 32 kann hinter dem Sekundärsteuerkasten angeordnet werden. Daneben ist es aber auch möglich, als Koppeleinrichtung je eine Koppelsteckbuchse 33 im Gehäuse der betreffenden Schaltfelder der benachbarten Schaltfeldeinheiten vorzusehen und die Koppelverbindung mittels eines Koppelkabels 34 vorzunehmen, das über angepaßte Koppelstecker mit den Koppelsteckbuchsen 33 elektrisch verbunden wird. Es können auch einfache Hochspannungsdurchführungen zur Anwendung gelangen, an welche Koppelleiter angeschraubt werden.

Für die elektrische Steuerung der Schaltanlage ist jedem Schaltfeld 1 zumindest eine Feldschnittstelle 25 zur Erfassung einer Überwachungsgröße, wie des Gasdrucks, der Gasdichte, der Bauteilerwärmung oder von Lichtbogen vorgesehen. Diese Feldschnittstelle 25 umfaßt jeweils einen Analog-Digitalwandler 35, der die von den Überwachungssensoren übermittelten analogen Steuersignale in digitale Signale umwandelt. Diese digitalen Signale können entweder unmittelbar auf die Signalleitung 24 geführt wrden. Sie können jedoch auch einem Lichtsender 36 aufgeschaltet werden, beispielsweise Laserdioden, welche die digitalisierten elektrischen Signale als Lichtsignale auf eine als Lichtwellenleiter 24 ausgebildete Signalleitung übertragen. Diese Signale werden in einer im Steuerschrank 26 untergebrachten Steuerzentraleinheit 37 verarbeitet, um gegebenenfalls Abschaltungen bestimmter Schaltfelder durchzuführen oder Betriebszustände der einzelnen Schaltfelder 1 abrufen und überprüfen zu können.

In Fig. 6 entspricht im übrigen die Schaltungsanordnung im linken äußeren Schaltfeld der Anordnung gemäß Fig. 3, im daneben befindlichen zweiten Schaltfeld der Schaltungsanordnung gemäß Fig. 2 und im dritten Schaltfeld der Anordnung gemäß Fig. 1.

## Patentansprüche

1. Schaltanlage, insbesondere metallgekapselte gasisolierte Mittelspannungsschaltanlage, mit einem oder mehreren nebeneinander, angeordneten Schaltfeld-Funktionseinheiten (1), wobei das Gehäuse (3) in Anreihrichtung durchgehend gleiches Querschnittsprofil aufweist und wobei jeweils in Bezug auf einen Frontwandabschnitt (5) zum einen unten ein zurückgesetzter Wandabschnitt (7) mit eingesetzten Kabelsteckbuchsen (10) und zum anderen ein nach vorn vorgezogener Wandabschnitt (6) vorgesehen sind, dadurch gekennzeichnet, daß der nach vorn vorgezogene Wandabschnitt (6) unmittelbar oberhalb des zurückgesetzten Wandabschnitts (7) und der zwischen den parallelen Ebenen des vorgezogenen (6) und des zurückgesetzten Wandabschnitts (7) stehende Basis-Frontwandabschnitt (5) oberhalb des vorgezogenen Wandabschnitts (6) angeordnet ist.

2. Schaltanlage nach Anspruch 1, dadurch gekennzeichnet, daß am Basis-Frontwandabschnitt (5) innerhalb eines Schaltfeldgehäuses (3) Last-(trenn-)schalter (15) in waagerechter Richtung nebeneinander und an der Außenseite deren Antriebe (15) angeordnet sind.

3. Schaltanlage nach Anspruch 1, dadurch gekennzeichnet, daß am Basis-Frontwandabschnitt (5) innerhalb eines Schaltfeldgehäuses (3) Trennleistungsschalter (15, 20) in waagrechter Richtung nebeneinander und an der Außenseite deren Antriebe (21) angeordnet sind.

4. Schaltanlage nach Anspruch 1 oder einem der folgenden, dadurch gekennzeichnet, daß innerhalb eines Schaltfeldgehäuses (3) im Bereich des vorgezogenen Wandabschnitts (6) in waagrechter Richtung nebeneinander Hochspannungssicherungen (16) angeordnet sind.

5. Schaltanlage nach Anspruch 2 oder 3, dadurch gekennzeichnet, daß den Last-(-trenn-)schaltern (15) oder Trennleistungsschaltern (15, 20) je ein Erdungsschalter (17) mit waagrechter Schwenkwelle zugeordnet ist.

6. Schaltanlage nach Anspruch 1 oder einem der folgenden, dadurch gekennzeichnet, daß im Bereich eines zurückgesetzten Wandabschnitts (7) innerhalb des Schaltfeldgehäuses (3) je ein mit einer Kabelsteckbuchse (10) zusammenwirkender Erdungsschalter (18) angeordnet ist.

7. Schaltanlage nach Anspruch 4 oder einem der folgenden, dadurch gekennzeichnet, daß die Hochspannungssicherungen (16) in einendig gasdicht durch den vorgezogenen Wandabschnitt (6) hindurchgeführten Isolierhülsen angeordnet sind.

8. Schaltanlage nach Anspruch 2 oder einem der folgenden, dadurch gekennzeichnet, daß der an dem Frontwandabschnitt (5) vorgesehene Schalter (15) je eine Vakuumschaltkammer (20) aufweist, die mit senkrechter Achse angeordnet ist und in den Raum hinter dem vorgezogenen Wandabschnitt (6) ragt.

9. Schaltanlage nach Anspruch 1 oder einem der folgenden, dadurch gekennzeichnet, daß mehrere Schaltfelder (1) zu einer Schaltfeldeinheit (2) zusammengefaßt sind und daß benachbarte Schaltfeldeinheiten (2) über eine Hochspannungskoppeleinrichtung (30, 34) elektrisch miteinander verbunden sind.

10. Schaltanlage nach Anspruch 9 oder einem der folgenden, dadurch gekennzeichnet, daß Koppelleiter (30) in einem außerhalb benachbarter Schaltfelder (1) angeordneten gasgefüllten Koppelkanal (31) geführt sind.

11. Schaltanlage nach Anspruch 10, dadurch gekennzeichnet, daß in die Koppelleiter (30) Trennschalter (32) eingeschaltet sind.

12. Schaltanlage nach Anspruch 9, dadurch gekennzeichnet, daß die Koppeleinrichtung aus je einer Koppelsteckbuchse (33) in benachbarten Schaltfeldern (1) besteht, die mittels eines Kabels (34) miteinander verbunden sind.

13. Schaltanlage nach Anspruch 1 oder einem der folgenden, dadurch gekennzeichnet, daß mehreren zu einer Schaltfeldeinheit (2) zusammengefaßten Schaltfeldern (1) ein gemeinsamer, etwa über ihre Länge in Anreihrichtung reichender, kleinvolumiger Sekundärsteuerkasten (23) zugeordnet ist.

14. Schaltanlage nach Anspruch 13, dadurch gekennzeichnet, daß im Sekundärsteuerkasten (23) für jedes Schaltfeld (1) eine Schaltfeldschnittstelle (25) für Steuersignale und eine gemeinsame Signalleitung (24) angeordnet sind.

15. Schaltanlage nach Anspruch 14, dadurch gekennzeichnet, daß die Feldschnittstelle (25) einen Analog-Digitalwandler (35) für aus dem zugeordneten Schaltfeld (1) entnommene analoge Steuersignale aufweist.

16. Schaltanlage nach Anspruch 14 oder 15 , dadurch gekennzeichnet, daß das digitale Ausgangssignal des Wandlers (35) einem Lichtsender (36) zugeführt ist, der einen Lichtwellenleiter (24) speist.

17. Schaltanlage nach Anspruch 14 oder einem der folgenden, dadurch gekennzeichnet, daß die gemeinsame Signalleitung (24) bzw. der Lichtwellenleiter im Sekundärsteuerkasten (23) zu einer Steuerzentraleinheit, (37) zugeführt ist.

18. Schaltanalge nach Anspruch 17, dadurch gekennzeichnet, daß die Steuerzentraleinheit (37) in einem seitlich an ein äußeres Schaltfeld (2) angereihten Steuerschrank (26) angeordnet ist.

19. Schaltanlage nach Anspruch 13 oder einem der folgenden, dadurch gekennzeichnet, daß der Sekundärsteuerkasten (23) auf der Oberseite der Schaltfelder (1) angeordnet ist und daß der Steuerschrank (26) der Höhe der Schaltfelder (1) mit aufgesetztem Sekundärsteuerkasten (23) angepaßt ist.

20. Schaltanlage nach Anspruch 1 oder einem der folgenden, dadurch gekennzeichnet, daß ein Steuerstromschrank (27) zur Stromversorgung der Steuereinrichtungen (21, 26) angefügt ist.

21. Schaltanlage nach Anspruch 20, dadurch gekennzeichnet, daß im Steuerstromschrank (27) ein Pufferbatteriemodul (28) vorgesehen ist.

22. Schaltanlage nach Anspruch 1, oder einem der folgenden, dadurch gekennzeichnet, daß wenigstens einer Kabelsteckbuchse (10, Koppelsteckbuchse (33) oder Hochspannungsdurchführung (33a) ein Strom- und/oder Spannungssensor (39) zugeordnet ist.

23. Schaltanlage nach Anspruch 22, dadurch gekennzeichnet, daß der Strom- und/oder Spannungssensor zumindest teilweise in die Kabelsteckbuchse (10), Koppelsteckbuchse (33) oder Hochspannungsdurchführung (33a) integriert ist.

24. Schaltanlage nach Anspruch 23, dadurch gekennzeichnet, daß ein Stromwandler (39a) und/oder ein elektrische Kondensator (39b) Teile des Strom- und/oder Spannungssensors sind.

25. Schaltanlage nach Anspruch 3 oder einem der folgenden, dadurch gekennzeichnet, daß der Trennleistungsschalter aus einem Mittelspannungs-Leistungsschalter (20), insbesondere einer Vakuumschaltkammer, und einem Trennschalter (15) besteht, daß beide Schalter, (15, 20) mittels eines einzigen Antriebs gemeinsam gesteuert sind und daß beide Schalter (15, 20) in einem gemeinsamen, mit Isoliergas, insbesondere SF6, gefüllten Schaltfeld angeordnet sind.

## Claims

1. Switchgear, particularly metal-enclosed gas-insulated medium-voltage switchgear, with one or more adjacently disposed switchpanel functional units (1), the housings (3) having a cross-sectional profile which is continuously uniform in the direction of serial arrangement and there being provided both a wall section (7) with inserted cable sockets (10), which is below and set back from a front wall section (5), and a wall section (6) which is advanced forward of the latter, characterized in that the forwardly advanced wall section (6) is disposed immediately above the set-back wall section (7) and the base front wall section (5) located between the parallel planes of the advanced wall section (6) and of the set-back wall section (7) is disposed above the advanced wall section (6).

2. Switchgear according to Claim 1, characterized in that load (disconnecting) switches (15) are disposed adjacently in the horizontal direction on the base front wall section (5) within a switchpanel housing (3), their drives (21) being disposed on the outside.

3. Switchgear according to Claim 1, characterized in that disconnecting power switches (15, 20) are disposed adjacently in the horizontal direction on the base front wall section (5) within a switchpanel housing (3), their drives (21) being disposed on the outside.

4. Switchgear according to Claim 1 or one of the subsequent claims, characterized in that high-voltage fuses (16) are disposed adjacently in the horizontal direction within a switchpanel housing (3) in the region of the advanced wall section (6).

5. Switchgear according to Claim 2 or 3, characterized in that an earthing switch (17) with a horizontal swivelling shaft is assigned to each of the load (disconnecting) switches (15) or disconnecting power switches (15, 20).

6. Switchgear according to Claim 1 or one of the subsequent claims, characterized in that an earthing switch (18), which acts together with a cable socket (10), is disposed in the region of each set-back wall section (7), within the switchpanel housing (3).

7. Switchgear according to Claim 4 or one of the subsequent claims, characterized in that the high-voltage fuses (16) are disposed in insulating sleeves which pass through the advanced wall section (6), being gas-tight at one end.

8. Switchgear according to Claim 2 or one of the subsequent claims, characterized in that each switch (15) provided on the front wall section (5) has a vacuum interruptor chamber (20) which is disposed with a vertical axis and projects into the space behind the advanced wall section (6).

9. Switchgear according to Claim 1 or one of the subsequent claims, characterized in that several switchpanels (1) are combined to form a switchpanel unit (2) and in that adjacent switchpanel units (2) are electrically interconnected through a high-voltage coupling device (30, 34).

10. Switchgear according to Claim 9 or one of the subsequent claims, characterized in that coupling conductors (30) are located in a gas-filled coupling channel (31) disposed outside adjacent switchpanels (1).

11. Switchgear according to Claim 10, characterized in that disconnecting switches (32) are inserted in the coupling conductors (30).

12. Switchgear according to Claim 9, characterized in that the coupling device consists of one coupling socket (33) in each of adjacent switchpanels (1) which are interconnected by means of a cable (34).

13. Switchgear according to Claim 1 or one of the subsequent claims, characterized in that there is assigned to several switchpanels (1) combined to form a switchpanel unit (2) a common, small-volume secondary control box (23) which extends approximately over the length of the switchpanels in the direction of serial arrangement.

14. Switchgear according to Claim 13, characterized in that a switchpanel interface (25) for control signals and a common signal line (24) are disposed in the secondary control box (23) for each switchpanel (1).

15. Switchgear according to Claim 14, characterized in that the panel interface (25) has an analog-to-digital converter (35) for analog control signals taken from the associated switchpanel (1).

16. Switchgear according to Claim 14 or 15, characterized in that the digital output signal of the converter (35) is supplied to an opto-transmitter (36) which feeds an optical waveguide (24).

17. Switchgear according to Claim 14 or one of the subsequent claims, characterized in that the common signal line (24) or optical waveguide in the secondary control box (23) is fed to a central control unit (37).

18. Switchgear according to Claim 17, characterized in that the central control unit (37) is disposed in a control cabinet (26) which laterally adjoins an outer switchpanel (1).

19. Switchgear according to Claim 13 or one of the subsequent claims, characterized in that the secondary control box (23) is disposed on the upper side of the switchpanels (1) and in that the control cabinet (26) corresponds to the height of the switchpanels (1) with the secondary control box (23) fitted on them.

20. Switchgear according to Claim 1 or one of the subsequent claims, characterized in that a control current cabinet (27) is added for the purpose of supplying current to the control devices (21, 26).

21. Switchgear according to Claim 20, characterized in that a back-up battery module (28) is provided in the control current cabinet (27).

22. Switchgear according to Claim 1 or one of the subsequent claims, characterized in that a current and/or voltage sensor (39) is assigned to at least one cable socket (10), coupling socket (33) or high-voltage bushing (33a).

23. Switchgear according to Claim 22, characterized in that the current and/or voltage sensor is at least partially integrated into the cable socket (10), coupling socket (33) or high-voltage bushing (33a).

24. Switchgear according to Claim 23, characterized in that a current transformer (39a) and/or an electric capacitor (39b) are parts of the current and/or voltage sensor.

25. Switchgear according to Claim 3 or one of the subsequent claims, characterized in that the disconnecting power switch consists of a medium-voltage circuit breaker (20), particularly a vacuum interruptor chamber, and a disconnecting switch (15), in that both switches (15, 20) are controlled jointly by means of a single drive and in that both switches (15, 20) are disposed in a common switchpanel filled with insulating gas, particularly SF6.

## Revendications

1. Installation de distribution électrique, en particulier, installation de distribution électrique à moyenne tension, présentant un blindage métallique et un isolement au gaz, comprenant une ou plusieurs unités de fonctionnement à panneaux de commutation (1), le coffret (3) présentant un profilé de section transversale identique en continu dans le sens d'alignement et pour laquelle il est prévu, d'une part, en bas, par rapport à une portion de paroi frontale (5), une portion de paroi (7) en retrait, munie de fiches femelles de câble insérées (10) et, d'autre part, une portion de paroi (6), amenée en avant, caractérisée en ce que la portion de paroi (6) amenée vers l'avant est disposée juste en amont de la portion de paroi (7) en retrait et la portion de paroi frontale de base (5), se trouvant entre les plans parallèles de la portion de paroi (6) en avant et de la portion de paroi (7) en retrait, est disposée en amont de la portion de paroi (6) en avant.

2. Installation de distribution électrique, selon la revendication 1, caractérisée en ce que des sectionneurs à coupure en charge et de puissance (15) sont disposés sur la portion de paroi frontale de base (5) à l'intérieur d'un coffret de panneau de commutation (3) et, ce, à l'horizontale, les uns à côté des autres et, ce, sur la face externe de leurs entraînements (21).

3. Installation de distribution électrique, selon la revendication 1, caractérisée en ce que des sectionneurs de puissance (15,20) sont disposés sur la portion de paroi frontale de base (5) à l'intérieur d'un coffret de panneau de commutation (3) et, ce, à l'horizontale, les uns à côté des autres et, ce, sur la face externe de leurs entraînements (21).

4. Installation de distribution électrique selon la revendication 1 ou l'une des suivantes, caractérisée en ce que des fusibles à haute tension (16) sont disposés dans la zone de la portion de paroi (6) en avant et, ce, à l'horizontale les uns à côté des autres à l'intérieur d'un coffret de panneau de commutation (3).

5. Installation de distribution électrique selon la revendication 2 ou 3, caractérisée en ce que les sectionneurs à coupure en charge (15) ou les sectionneurs de puissance (15, 20) sont associés à un interrupteur de mise à la terre (17) disposant d'un arbre de pivotement horizontal.

6. Installation de distribution électrique selon la revendication 1 ou l'une des suivantes, caractérisée en ce qu'un interrupteur de mise à la terre (18), coopérant avec une fiche femelle de câble (10) est disposé dans la zone d'une portion de paroi (7) en retrait à l'intérieur du coffret de panneau de commutation (3).

7. Installation de distribution électrique selon la revendication 4 ou l'une des suivantes, caractérisée en ce que les fusibles à haute tension (16) sont disposés dans des douilles isolantes dont une extrémité est étanche au gaz et qui traverse la portion de paroi (6) en retrait.

8. Installation de distribution électrique selon la revendication 2 ou l'une des suivantes, caractérisée en ce que l'interrupteur (15), prévu sur la portion de paroi frontale (5), présente une chambre de commutation à vide (20), dont l'axe est perpendiculaire et qui s'engage dans l'espace derrière la portion de paroi (6) en avant.

9. Installation de distribution électrique selon la revendication 1 ou l'une des suivantes, caractérisée en ce que plusieurs panneaux de commutation (1) sont assemblés en une unité de panneaux de commutation (2) et en ce que des unités de panneaux de commutation voisines (2) sont reliées électriquement entre elles par un dispositif de couplage à haute tension (30, 34).

10. Installation de distribution électrique selon la revendication 9 ou l'une des suivantes, caractérisée en ce que des conducteurs de couplage (30) sont guidés dans un canal de couplage (31) rempli de gaz et disposé à l'extérieur des panneaux de commutation voisins (1).

11. Installation de distribution électrique selon la revendication 10, caractérisée en ce que des sectionneurs (32) sont montés dans les conducteurs de couplage (30).

12. Installation de distribution électrique selon la revendication 9, caractérisée en ce que le dispositif de couplage se compose d'une fiche femelle de couplage (33) dans des panneaux de commutation voisins (1) qui sont reliés entre eux par un câble (34).

13. Installation de distribution électrique selon la revendication 1 ou l'une des suivantes, caractérisée en ce que plusieurs panneaux de commutation (1), assemblés en une unité de panneaux de commutation (2), sont associés à un boîtier de commande secondaire (23) de petit volume et s'étendant environ sur leur longueur dans le sens de l'alignement.

14. Installation de distribution électrique selon la revendication 13, caractérisée en ce qu'une interface de panneau de commutation (25) pour les signaux de commande et une ligne de signaux commune sont disposées dans le boîtier de commande secondaire (23) pour chaque panneau de commutation (1).

15. Installation de distribution électrique selon la revendication 14, caractérisée en ce que l'interface de panneau (25) présente un convertisseur numérique analogique (35) pour les signaux de commande analogiques provenant du panneau de commutation (1) associé.

16. Installation de distribution électrique selon la revendication 14 ou 15, caractérisée en ce que le signal de sortie numérique du convertisseur (35) est délivré à un émetteur lumineux (36) qui alimente un guide d'ondes lumineuses (24).

17. Installation de distribution électrique selon la revendication 14 ou l'une des suivantes, caractérisée en ce que la ligne de signaux commune (24) respectivement le guide d'ondes lumineuses, se trouvant dans le boîtier de commande secondaires (23), est amenée à une unité centrale de commande (37).

18. Installation de distribution électrique selon la revendication 17, caractérisée en ce que l'unité centrale de commande (37) est disposée dans une armoire de commande (26) alignée latéralement avec un panneau de commutation externe (2).

19. Installation de distribution électrique selon la revendication 13 ou l'une des suivantes, caractérisée en ce que le boîtier de commande secondaire (23) est disposé sur la face supérieure des panneaux de commutation (1) et en ce que l'armoire de commande (26), comprenant le boîtier de commande secondaire (23), est ajustée à la hauteur des panneaux de commutation (1).

20. Installation de distribution électrique selon la revendication 1 ou l'une des suivantes, caractérisée en ce qu'une armoire de commande de courant (27) est ajoutée pour l'alimentation électrique des dispositifs de commande (21, 26).

21. Installation de distribution électrique selon la revendication 20, caractérisée en ce qu'il est prévu, dans l'armoire de commande de courant (27), un module de batterie tampon (28).

22. Installation de distribution électrique selon la revendication 1 ou l'une des suivantes, caractérisée en ce qu'au moins soit une fiche femelle de câble (10), soit une fiche femelle de couplage (33) ou soit un passage haute tension (33a) est associé à un capteur de tension et/ou de courant (39).

23. Installation de distribution électrique selon la revendication 22, caractérisée en ce que le capteur de tension et/ou de courant est intégré du moins partiellement dans la fiche femelle de câble (10), dans la fiche femelle de couplage (33) ou dans le passage à haute tension (33a).

24. Installation de distribution électrique selon la revendication 23, caractérisée en ce qu'un convertisseur de courant (39a) et/ou un condensateur électrique (39b) font partie du capteur de tension et/ou de courant.

25. Installation de distribution électrique selon la revendication 3 ou l'une des suivantes, caractérisée en ce que le sectionneur de puissance se compose d'un interrupteur de puissance à moyenne tension (20), en particulier d'une chambre de commutation à vide, et d'un sectionneur (15), en ce que deux interrupteurs (15, 20) sont commandés en commun par l'intermédiaire d'un entraînement unique et en ce que les deux interrupteurs (15, 20) sont disposés dans un panneau de commutation commun, rempli de gaz isolant, en particulier du SF6.
